# EUROPÄISCHE PATENTSCHRIFT

(11) **EP 0 418 338 B1**
(45) Veröffentlichungstag und Bekanntmachung des Hinweises auf die Patenterteilung: **27.09.1995**
(21) Anmeldenummer: 90902604.9
(22) Anmeldetag: 09.02.1990
(51) Int. Cl.: B01J 19/32, B01F 5/06, F28F 25/08

(54) **MEHRZÜGIGE WIRBELPACKUNG**
MULTIPLE VORTEX-MIXING INSERT
GARNITURE A PASSAGES MULTIPLES POUR LA GENERATION DE TOURBILLONS

(30) Priorität: 09.03.1989 DE 3907573
(43) Veröffentlichungstag der Anmeldung: 27.03.1991
(73) Patentinhaber: Sulzer Chemtech AG, 8404 Winterthur (CH)
(72) Erfinder: WILHELM, Gerd, D-4040 Neuss 21 (DE)
(74) Vertreter: Hammer, Bruno, Dr.
(86) Internationale Anmeldenummer: CH9000026
(87) Internationale Veröffentlichungsnummer: WO9010497

(56) Entgegenhaltungen:
- EP-A- 0 069 241
- WO-A-86/06296

## Beschreibung

Die Erfindung betrifft geordnet aufgebaute Packungen, die als Einbauten in Einrichtungen der thermischen Trenntechnik, z.B. bei Rektifikationen, Extraktionen und Sorptionen, aber auch in der Mischtechnik verwendet werden können.

Insbesondere geht es um solche Packungen, in denen, über ihre räumliche Ausdehnung verteilt, gleichartige ventilatorförmige Flügelelemente enthalten sind. Derartige Elemente sind in den Schriften DE-OS 35 15 300 A1 und PCT WO86/06296 beschrieben. Diese Packungselemente begünstigen in Säulenapparaten und Kanälen eine Querverteilung und -vermischung der strömenden Phasen, die in chemischen und thermischen Prozessen der Trenn- und Mischtechnik miteinander in Kontakt treten. Die vorteilhafte Verwendung sogenannter Wirbelpackungen, die die genannten ventilatorartigen Flügelelemente enthalten, schlägt sich z.B. in Anwendungsfällen der thermischen Trenntechnik in einer zu anderen Packungen vergleichsweise größeren Zerlegungswirkung bei Stoffaustauschprozessen nieder.

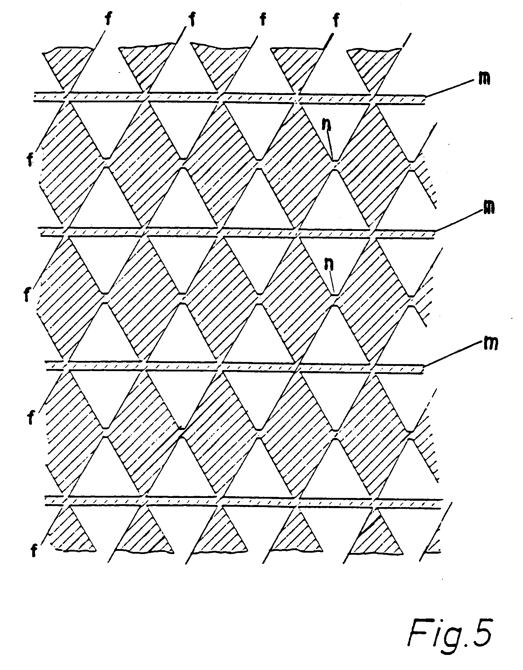

Gerade in bezug auf die Trennwirksamkeit sogenannter Wirbelpackungen ist es allerdings nicht gleichgültig, in welcher Abfolge ventilatorartige Flügelelemente in einer Packung auferanderfolgen. Mit der anhand von Fig. 5 bis Fig. 7 der DE-OS 35 15 300 A1 charakterisierten Packungsstruktur werden wendelförmige Wege für Teilströme der Phasen vorgegeben, wobei benachbarte Teilströme derselben Phase gegenläufigen Drehsinn aufweisen können. Die dort beschriebene Packung zeigt eine sehr hohe Effizienz in der Trennleistung. Allerdings ist dafür ein größerer Fertigungs- und Montageaufwand als bei anderen vergleichbaren Produkten in Kauf zu nehmen, da der Packungsaufbau sich allem Anschein nach nur in Lagen verwirklichen läßt, die senkrecht zur Hauptströmungsachse aufgeschichtet werden. - Andere Packungsarten, die Packungen der Firmen Sulzer und Montz beispielsweise, beschrieben in R. Billet: Energieeinsparung bei thermischen Stofftrennverfahren, ISBN 3-7785-0912-8, verwenden zick-zack-förmig gefaltete Bleche, sogenannte plissierte Matten, die achsenparallel als Einbauten in Säulen eingebracht werden können, wobei üblicherweise die Faltkanten der zur Packung verwendeten Bleche eine windschiefe Lage zur Säulenachse einnehmen. - Auch für die in den beiden Schriften DE-OS 35 15 300 A1 und PCT WO86/06296 beschriebene Wirbelpackung mit ventilatorartigen Flügelelementen sind Ausführungsversionen beschrieben, bei denen sich der Packungsaufbau ebenfalls auf der Basis der sogenannten plissierten Matten erreichen läßt.

Hierbei sei insbesondere auf die durch Fig. 12 der PCT-Anmeldung WO86/06296 dargestellte Ausführungsform verwiesen. Gegenüber der in Fig. 5 bis Fig. 7 der DE-OS 35 15 300 A1 charakterisierten Packung ergeben sich aus der zick-zack-förmigen Blechfaltung gerade, dreieckförmige Kanäle, die zwar seitliche Öffnungen aufweisen, aber vor allem für die leichtere Phase, das ist meist für Dampf bzw. Gas, bevorzugte, gerade Strömungswege bilden. Die ventilatorartigen Flügelelemente bleiben in dieser Ausführungsform in erster Hinsicht auf die von oben nach unten fließende flüssige Phase wirksam, deren Strömungsgeschwindigkeit, bezogen auf den freien Säulenquerschnitt, wesentlich geringer ist als als diejenige der leichteren Phase.

Dem Vorteil einer billigeren Fertigungsweise der Packung steht im Fall der Ausführungsform gemäß Fig. 12 der PCT-Anmeldung WO86/06296 ein Nachteil gegenüber:
Mit höherer Gas- bzw. Dampfbelastung setzt verstärkt eine Strömung der leichteren Phase durch die geraden Packungskanäle ein, wobei die erwünschte Quervermischung insbesondere im Dampf bzw. Gas gemindert wird.

Die durch die Plissierungen gebildeten fluchtenden Kanäle räumen einem Gas- bzw. Dampfstrom für jeweils einen Packungsblock Vorzugsrichtungen ein, die sich z.B. in Form paralleler Geraden auf eine Querschnittsebene des Strömungskanals bzw. der die Packung umhüllenden Kolonne projizieren ließen. Aus der Sicht ausreichender Quervermischung in der leichteren, strömenden Phase wäre stattdessen eine Gleichverteilung der Geschwindigkeitskomponenten über den Projektionsquerschnitt wünschenswert.

Um diesen als Folge einer vereinfachten Packungsherstellung auftretenden Nachteil auszugleichen, stellt sich die Aufgabe, unter Beibehaltung von ventilatorartigen Flügelelementen, die sich zumindest für die Gleichverteilung herabströmender Flüssigkeit über den Querschnitt als sehr wirkungsvoll erwiesen haben, eine Packungsstruktur zu finden, die sich ebenfalls kostengünstig aus gekanteten Blechen, d.h. aus sogenannten plissierten Matten, herstellen läßt, die aber dem Dampf bzw. dem Gas zur Durchströmung der Packung mehr als nur eine in der Querschnittsprojektion erkennbare Vorzugsrichtung aufprägen und dadurch die Quervermischung in der Gasphase fördern.

Die Lösung dieser Aufgabe gelingt, wenn man regelmäßige ventilatorartige Flügelelemente über einer flächigen, quadratischen Grundrasterung aus gleichseitigen Pyramiden bildet, deren Seitenflächen abwechselnd offen und geschlossen sind, wenn ferner man über jedem Element des Grundrasters zwei Pyramiden - nach jeder Seite der Rasterebene eine - derart errichtet, daß die beiden auf der Grundseite eines Rasterelementes stehenden Seitenflächen die zu jeweils verschiedenen Pyramiden gehören, eine ebene Fläche bilden, und wenn man schließlich derartig strukturierte Lagen mit ihren Spitzen so aufeinandersetzt, daß die an den Pyramidenspitzen zusammenstoßenden Flächen keine Ebenen miteinander bilden.

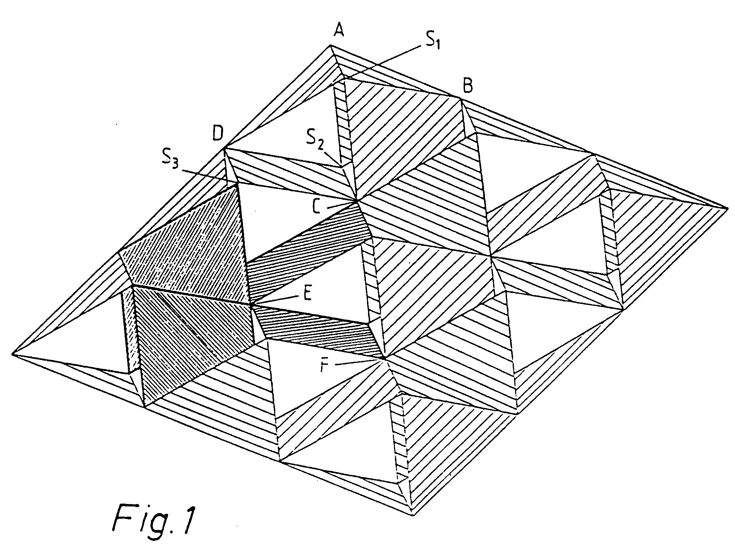

In Fig. 1 ist die Grundstruktur der Packung aufgezeigt. Die Punkte A, B, C, D sind Eckpunkte eines quadratischen Grundrasters. Die Pyramide mit der Spitze S₁ hat die geschlossenen Seitenflächen ADS₁ und CBS₁. Die Pyramidenspitze S₂ liegt senkrecht unterhalb von S₁; zur Pyramide mit der Spitze S₂ gehören die Seitenflächen ABS₂ und CDS₂. Die letztgenannte Seitenfläche vereinigt sich mit der Seitenfläche DCS₃, die zur nach oben weisenden Nachbarpyramide mit der Spitze S₃ gehört. Beide Pyramidenseiten bilden miteinander eine ebene Fläche, nämlich die Raute DS₃CS₂. - Punkt E ist das Zentrum eines feststehenden ventilatorartigen Flügels, der aus vier rautenförmigen Flächen gebildet wird und durch enge Schraffur in Fig. 1 hervorgehoben wird.

Um jeden Fußpunkt innerhalb des Gebildes der Fig. 1 ist ein feststehender Ventilatorflügel auszumachen. Dem zum Fußpunkt F gehörigen Ventilatorflügel ist der entgegengesetzte Drehsinn wie demjenigen um den Fußpunkt E zuzuschreiben.

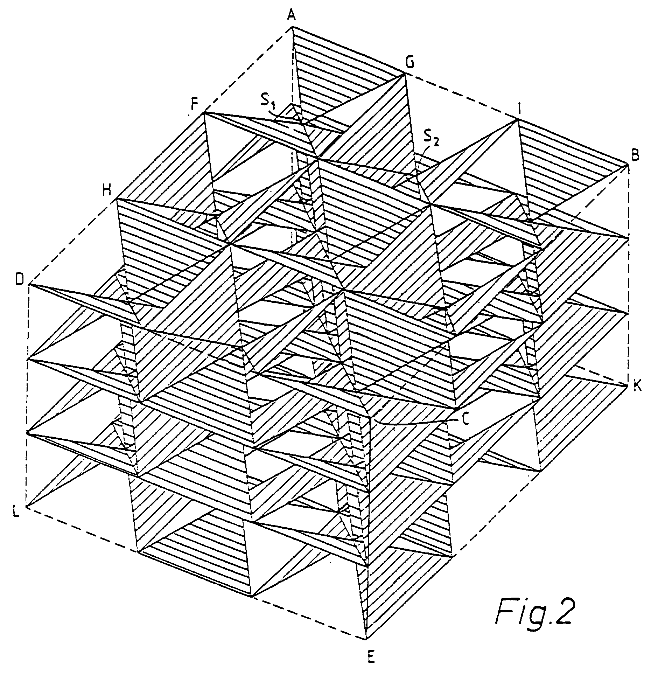

In Fig. 2 ist ein Packungsblock gezeichnet, der aus aufeinandergeschichteten Lagen gemäß Fig. 1 besteht. Die obere und untere Lage in Fig. 2 besteht jeweils aus einer halben Lage gemäß Fig. 1, wobei der Schnitt durch die Rasterebene geführt ist. Mit S₁ und S₂ sind in Fig. 2 jeweils zwei aneinanderstoßende Pyramidenspitzen beispielhaft gekennzeichnet. Der durch die Ecken A, B, C, D markierte Querschnitt des Packungsblocks in Fig. 2 ist in seiner senkrechten Projektion bereits durch zwei halbe Lagen gemäß Fig. 1 dicht.

Die Besonderheit des Packungsaufbaus gemäß Fig. 2 ist in zweierlei Hinsicht bemerkenswert:
Erstens läßt sich die Packung nicht nur lagenweise, wie oben beschrieben, sondern auch aus plissierten Matten zusammensetzen. Denkt man sich nämlich die Packung einmal entlang der Querschnittsdiagonalen AC in senkrechter Richtung nach E hin durchtrennt, so führen Parallelschnitte hierzu nach links und rechts, und zwar durch die Punkte F, G, H, und I, zu zick-zack-förmig gekanteten und rautenförmig ausgestanzten Blechen. So gebt z.B. eine plissierte Matte, die durch die genannten Parallelschnitte durch die Punkte A und F in Fig. 2 entstanden ist, der Dampfströmung in zwar nur stückweise ummantelten Dreieckskanälen eine gerade Ausrichtung, die parallel zu den genannten Schnitteberen und von hinten-unten nach vorne-oben verläuft. Entsprechend ist die Ausrichtung der Dampfströmung in der durch Parallelschnitte durch A und G markierten Blechmatte den genannten Schnittflächen ebenfalls parallel; die Strömungsrichtung ist jetzt allerdings aufgrund der Berandung der Dreieckskanäle vornehmlich von vorne-unten (etwa Punkt E) nach hinten-oben (etwa Punkt A) in gewissem Maße vorgezeichnet.
Zweitens wird an der beschriebenen Packungsstruktur erfindungsgemäß beansprucht, daß für die Dampfströmung eine weitere zunächst aus Fig. 2 nicht erkennbare Gassenbildung vorhanden ist, die quer zur bisher angesprochenen Schnittfläche durch die Punkte A, C, E in Fig. 2, also parallel zu einem senkrechten Schnitt durch die Ebene mit den Punkten D, B, K, L verläuft. Dreht man nämlich den Packungsblock der Fig. 2 um 90° um seine senkrechte Zentralachse nach links, so wird auch die Gassenbildung erkennbar, die parallel zur rechteckigen Schnittebene BKLD verläuft.

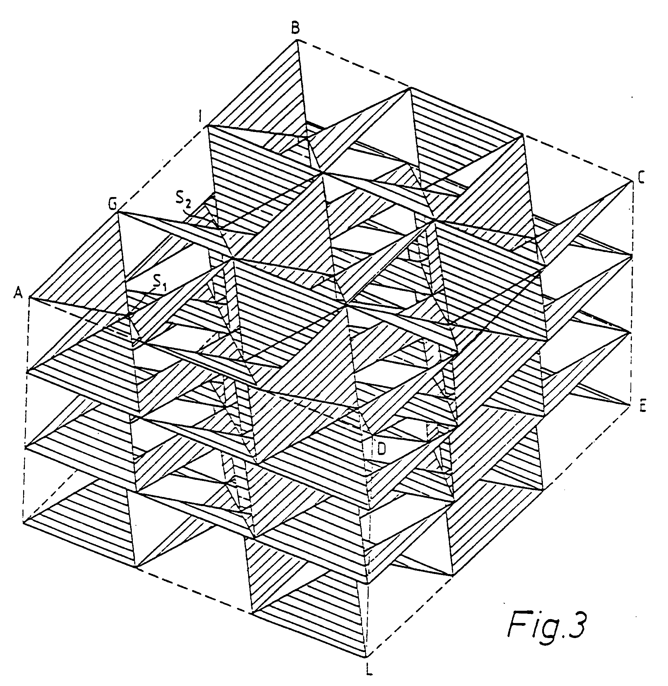

In Fig. 3 ist der um 90° gedrehte Packungskörper dargestellt, bei dem die aus Fig. 2 durch Buchstaben bekannten Punkte ihre Bezeichnungen beibehalten haben. - So kommt durch die beschriebene Drehung beispielsweise Punkt B aus Fig. 2 in Fig. 3 an die Stelle zu liegen, an der sich in Fig. 2 Punkt A befindet. Für die Drehung der anderen Punkte in Fig. 2 und damit für den Zusammenhang zwischen Fig. 2 und Fig. 3 gilt Ensprechendes. In Fig. 3 werden jetzt ebenfalls parallel zum senkrechten Schnitt durch die Punkte B, D, L Gassen für die Durchströmung der Phasen in analoger Form zu Fig. 2 erkennbar.

In der Tat sind also in einem erfindungsgemäßen Packungsblock gemäß Fig. 2 und Fig. 3 gegeneinander versetzte Kanalreihen vorhanden, nämlich einmal solche Reihen, die parallel zur Schnittfläche durch die Punkte B, D, L verlaufen, und zweitens dazu versetzte Reihen, die parallel zur Schnittfläche durch die Punkte A, C, E verlaufen, Fig. 2 und Fig. 3. - Der beabsichtigten verstärkten Quervermischung in der Strömung der leichteren Phase ist damit Rechnung getragen.

Aus fertigungstechnischer Sicht ist bemerkenswert, daß sich der in Fig. 2 und Fig. 3 dargestellte Packungsblock in zweierlei Weise aufbauen läßt, nämlich einmal durch plissierte Matten, die parallel zur Schnittebene mit den Punkten A, C, E oder aber parallel zur Schnittebene mit den Punkten B, D, L aufgeschichtet sein können, Fig. 2 und Fig. 3.

Der Packungsblock ist sowohl in Fig. 2 als auch in Fig. 3 in einer idealen Form dargestellt, die sich fertigungstechnisch schwer verwirklichen läßt, da sich die Enden der Pyramidenflächen nur punktförmig berühren. Um der Stabilität des Packungskörpers bei der praktischen Ausführung zu entsprechen, können an den Kontaktstellen der Pyramidenflächen Überlappungen vorgesehen werden.

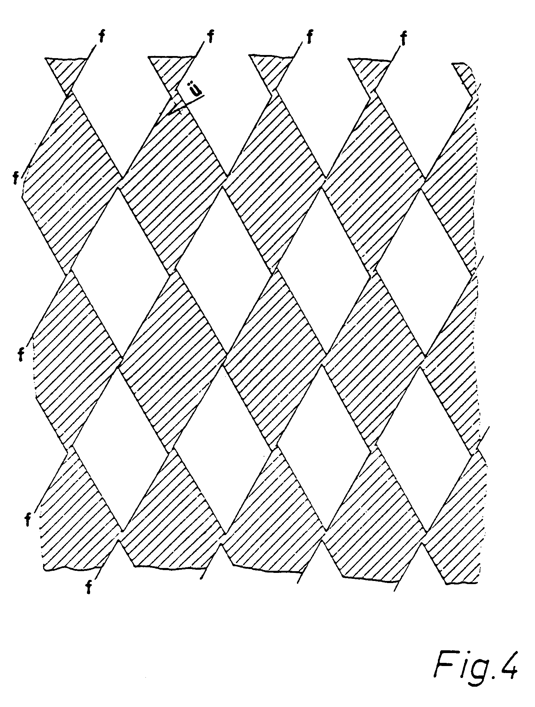

In Fig. 4 ist eine Blechtafel skizziert, die in den nicht-schraffierten Teilen rautenförmig ausgestanzt ist. Durch Überlappungen ü in Fig. 4 wird die Stabilität der aus der Blechtafel erstellten Matte erreicht. Die zick-zack-förmige Mattenform wird durch Kantungen längs der strichpunktierten Linien f-f erzielt.

In Fig. 5 ist eine andere Form einer erfindungsgemäßen, plissierbaren Blechtafel dargestellt. Die strichpunktierten Geraden f-f bedeuten wieder die Plissierkanten. - Die an sich rautenförmigen Ausstanzungen sind an den spitzen Ecken durch kurze Stege n abgeflacht und von weiteren Stegen m durchzogen. Durch eine solche Maßnahme läßt sich die Packungsstabilität ebenfalls in erforderlichem Maß erreichen.

Es ist noch erwähnenswert, daß die erfindungsgemäße Packung außer den bisher genannten Dreieckskanälen, die jeweils eine Geschwindigkeitskomponente der Strömungen in Richtung der Kolonnenachse zulassen, auch zwei gegeneinander versetzte Kanalreihen enthält, die parallel zur Querschnittsebene der Kolonne verlaufen. Die Vielzahl unterschiedlich ausgerichteter Kanalreihen, also eine "Mehrzügigkeit" der Packung, begünstigt zusätzlich zu den vorhandenen Flügelelementen die Quervermischung, vor allem in der leichteren Phase. Im Fall des Gegenstrombetriebes, z.B. von Flüssigkeit- und Dampf, wird die Belastbarkeitsgrenze, gemessen an der maximal möglichen Dampfgeschwindigkeit, gegenüber anderen Packungen unter sonst vergleichbaren Bedingungen erheblich gesteigert.

Zur weiteren Verbesserung der Phasenverteilung über den Kolonnenquerschnitt lassen sich in die Packungsoberfläche Querrillen einprägen oder Löcher einstanzen. Derselben Absicht dient auch, wenn die Packung aus metallischem oder textilem Gewebe gefertigt wird.

Für die erfindungsgemäße Packung können aus anderen Gründen, z.B. aus Kosten- oder Korrosionsgründen, neben Metallen und Textilien auch andere Werkstoffe wie Kunststoffe und Keramiken in Betracht kommen.

## Patentansprüche

1. Packung für die Verfahrenstechnik, insbesondere für die thermische Trenn- und Mischtechnik, welche Lagen mit regelmässig aufgebauten ventilatorartigen Flügelelementen umfasst und ein System unterschiedlich ausgerichteter Reihen von nicht völlig ummantelten Kanälen enthält, wobei über einer ebenen, quadratischen Grundrasterung gleichseitige Pyramiden angeordnet sind, deren Seitenflächen abwechselnd offen und geschlossen sind,
dadurch gekennzeichnet, dass über jedem Element (A, B, C, D in Fig.1) des Grundrasters beidseits je eine derartige Pyramide errichtet ist, wobei bezüglich dieser Doppelpyramide (A, B, C, D, S₁, S₂) die Seitenflächen ebenfalls abwechselnd offen und geschlossen sind, dass die Pyramiden benachbarter Lagen mit den Spitzen (S₁, S₂) aufeinander gesetzt sind und die an den Pyramidenspitzen zusammenstossenden Pyramidenflächen keine Ebene miteinander bilden und dass ferner die beiden auf der Grundseite eines Rasterfeldes stehenden Seitenflächen, die zu jeweils verschiedenen Pyramiden gehören, eine ebene Fläche bilden.

2. Packung nach Anspruch 1, dadurch gekennzeichnet, dass die Pyramidenflächen nicht vollkommen geschlossen sind, sondern eine oder mehrere kleine Öffnungen haben.

3. Packung nach Anspruch 1 oder 2, dadurch gekennzeichnet, dass sie aus zick-zack-förmig gefaltetem, flächigem Material zusammengesetzt ist, wobei das flächige Material in ungefaltetem Zustand eine im wesentlichen schachbrettartige Anordnung von rauten- oder parallelogrammförmigen Teilflächen aufweist, die als Ausnehmungen bzw. stoffliche Flächen vorliegen, und dass die Faltkantungen (f-f) mit Kanten der Teilflächen zusammenfallen.

4. Packung nach Anspruch 3, dadurch gekennzeichnet, dass die Ausnehmungen kleiner als die stofflichen Flächen sind, so dass die Kanten der stofflichen Flächen an deren Spitzen sich überlappen (Ü).

5. Packung nach einem der Ansprüche 3 bis 4, dadurch gekennzeichnet, dass die den kürzeren Diagonalen zugeordneten Eckpunkte der Ausnehmungen durch Stege (m) verbunden sind.

6. Packung nach einem der Ansprüche 3 bis 5, dadurch gekennzeichnet, dass das flächige Material ein Gewebe, ein Blech oder eine Folie ist.

7. Packung nach einem der Ansprüche 1 bis 6, dadurch gekennzeichnet, dass sie aus Metall, Textilien, Kunststoff oder Keramik besteht.

## Claims

1. A regular packing for process engineering, more particularly for thermal separating and mixing technology, comprising layers having regular fan-like vane elements and a system of differently aligned rows of partly covered channels, wherein equilateral pyramids are disposed above a plane square grid, the side surfaces of the pyramids being alternately open and closed, characterised in that two such pyramids are raised above each element (A, B, C, D in Fig. 1) of the grid, one on either side thereof, wherein the side surfaces in respect of this double pyramid (A, B, C, D, S₁, S₂) are also alternately open and closed, in that the pyramids of adjacent layers are disposed with the apexes (S₁) one upon the other and the pyramid surfaces abutting at the pyramid apexes do not form planes with one another and in that the two side surfaces situated on the base side of a grid field and which belong to different pyramids form a plane surface.

2. A packing according to claim 1, characterised in that the pyramid surfaces are not completely closed but are formed with one or more small orifices.

3. A packing according to claim 1 or 2, characterised in that it is assembled from flat material folded in zig-zag form, the flat material in the unfolded state having a substantially chessboard-like arrangement of rhombic or parallelogram-shaped sub-surfaces, which are present in the form of cut-outs and material surfaces, and in that the fold edges (f-f) coincide with edges of the sub-surfaces.

4. A packing according to claim 3, characterised in that the cut-outs are smaller than the material surfaces so that the edges of the material surfaces overlap at their apexes (Ü).

5. A packing according to claim 3 or 4, characterised in that the corner points of the cut-outs associated with the shorter diagonals are connected by webs (m).

6. A packing according to any one of claims 3 to 5, characterised in that the flat material is textile fabric, a metal sheet or a film or foil.

7. A packing according to any one of claims 1 to 6, characterised in that it consists of metal, textiles, plastics or ceramics.

## Revendications

1. Garniture pour la technologie des procédés industriels, en particulier pour la technologie de la séparation thermique et des mélanges, comprenant des couches constituées d'éléments à ailettes à structure régulière en forme de ventilateurs et un système de rangées diversement orientées de canaux qui ne sont pas complètement enveloppés, sur une trame de base plane et carrée étant disposées des pyramides équilatérales dont les faces latérales sont alternativement ouvertes et fermées, caractérisée en ce qu'une pyramide de ce type est élevée au-dessus de chaque élément (A, B, C, D sur la figure 1) de la trame de base de part et d'autre de celle-ci, les faces latérales de cette double pyramide (A, B, C, D, S₁, S₂) étant là encore alternativement ouvertes et fermées, en ce que les pyramides de couches voisines sont posées les unes sur les autres par l'intermédiaire de leurs pointes (S₁, S₂), et les faces des pyramides en contact au niveau de leurs pointes ne forment pas un plan les unes avec les autres, et en ce que les deux faces latérales qui reposent sur la face de base d'une case de la trame et qui appartiennent chacune à des pyramides différentes forment une surface plane.

2. Garniture selon la revendication 1, caractérisée en ce que les faces des pyramides ne sont pas complètement fermées, mais comportent une ou plusieurs ouvertures de petite taille.

3. Garniture selon la revendication 1 ou 2, caractérisée en ce qu'elle est réalisée en matériau plat plié en zigzag, le matériau plat comportant, à l'état non plié, un agencement sensiblement en damier de surfaces partielles en forme de losanges ou de parallélogrammes qui ont la forme d'évidements ou de surfaces pleines, et en ce que les arêtes de pliage (f-f) coïncident avec les arêtes des surfaces partielles.

4. Garniture selon la revendication 3, caractérisée en ce que les évidements sont plus petits que les surfaces pleines, de sorte que les arêtes des surfaces pleines se chevauchent (ü) au niveau de leurs extrémités.

5. Garniture selon l'une des revendications 3 et 4, caractérisée en ce que les sommets des évidements correspondant aux diagonales les plus courtes sont reliés par des nervures (m).

6. Garniture selon l'une des revendications 3 à 5, caractérisée en ce que le matériau plat est un tissu, une tôle ou une feuille.

7. Garniture selon l'une des revendications 1 à 6, caractérisée en ce qu'elle est réalisée en métal, en matières textiles, en matière synthétique ou en céramique.
